# EUROPEAN PATENT APPLICATION

(11) **EP 3 263 384 A1**
(43) Date of publication of application: **03.01.2018**
(21) Application number: 17175281.9
(22) Date of filing: 09.06.2017
(51) Int. Cl.: B60K 7/00, B60K 17/04, H02K 5/173, F16H 57/08, F16H 57/00, H02K 7/08

(54) **DRIVING APPARATUS AND TIRE-WHEEL ASSEMBLY INCLUDING DRIVING APPARATUS**

(30) Priority: 14.06.2016 JP 2016118357
(71) Applicant: JTEKT CORPORATION, Osaka-shi, Osaka 542-8502 (JP)
(72) Inventor: HASUDA, Yasuhiko, Osaka-shi,, Osaka 542-8502 (JP); NIMURA, Keita, Osaka-shi,, Osaka 542-8502 (JP); ARIMA, Masanori, Osaka-shi,, Osaka 542-8502 (JP)
(74) Representative: Winter, Brandl, Fürniss, Hübner, Röss, Kaiser, Polte - Partnerschaft mbB

(57) **Abstract**

A driving apparatus includes an output shaft, a driving motor, and a speed-reducer. The driving motor includes a stator having an annular shape, and a rotor having an annular shape. The rotor is disposed radially inward of the stator. The speed-reducer is disposed radially inward of the driving motor. The speed-reducer is configured to reduce the speed of rotation output from the rotor and transmit a rotary driving force of the rotor to the output shaft.

## Description

### BACKGROUND OF THE INVENTION

### 1. Field of the Invention

The invention relates to a driving apparatus and a tire-wheel assembly including the driving apparatus.

### 2. Description of Related Art

There is a known driving apparatus configured such that the speed of rotation output from a motor is reduced by a speed-reducer and a rotary driving force generated by the motor is transmitted to a rotary shaft. Japanese Patent Application Publication No. 2016-97761 (JP 2016-97761 A) describes an in-wheel motor driving apparatus including an input shaft (output shaft), a motor portion (motor), and a speed-reducer, as an example of the above-described driving apparatus. The speed-reducer reduces the speed of rotation output from the motor portion, and outputs the rotation having a reduced speed to the input shaft. In the in-wheel motor driving apparatus, the motor portion and the speed-reducer are disposed side by side along the axial direction of the input shaft.

The driving apparatus described in JP 2016-97761 A is configured such that the motor and the speed-reducer are disposed side by side along the axial direction of the output shaft. This configuration increases the width of the driving apparatus in the axial direction. This makes it difficult to achieve desired size reduction of the driving apparatus.

### SUMMARY OF THE INVENTION

One object of the invention is to provide a driving apparatus configured to achieve desired size reduction thereof and a tire-wheel assembly including the driving apparatus.

A driving apparatus according to an aspect of the invention includes an output shaft, a motor, and a speed-reducer. The motor includes a stator having an annular shape, and a rotor having an annular shape. The rotor is disposed radially inward of the stator or disposed radially outward of the stator. The speed-reducer is disposed radially inward of the motor. The speed-reducer is configured to reduce the speed of rotation output from the rotor and transmit a rotary driving force of the rotor to the output shaft.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a plan view schematically illustrating a drive-train of a vehicle;
FIG. 2 is a sectional view illustrating a driving apparatus according to an embodiment of the invention; and
FIG. 3 is a sectional view illustrating a driving apparatus according to another embodiment of the invention.

### DETAILED DESCRIPTION OF EMBODIMENTS

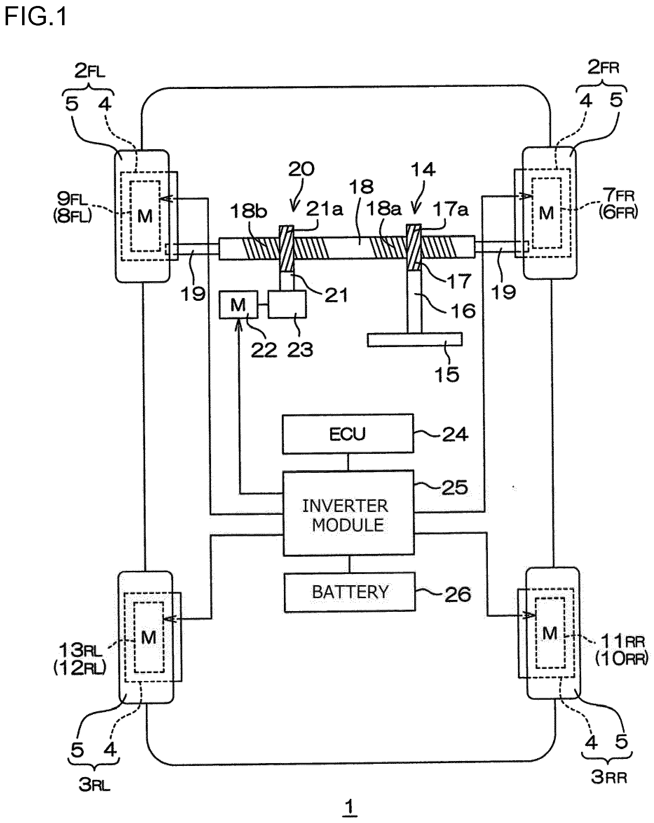

Hereinafter, example embodiments of the invention will be described in detail with reference to the accompanying drawings. FIG. 1 is a plan view schematically illustrating a drive-train of a vehicle 1. As illustrated in FIG. 1, the vehicle 1 is a four-wheel-drive vehicle, and includes four tire-wheel assemblies including a pair of front tire-wheel assemblies 2_{FR}, 2_{FL}, and a pair of rear tire-wheel assemblies 3_{RR}, 3_{RL}. The pair of front tire-wheel assemblies 2_{FR}, 2_{FL} includes a front right tire-wheel assembly 2_{FR} and a front left tire-wheel assembly 2_{FL}. The pair of rear tire-wheel assemblies 3_{RR}, 3_{RL} includes a rear right tire-wheel assembly 3_{RR} and a rear left tire-wheel assembly 3_{RL}. Each of the front right tire-wheel assembly 2_{FR}, the front left tire-wheel assembly 2_{FL}, the rear right tire-wheel assembly 3_{RR}, and the rear left tire-wheel assembly 3_{RL} include a wheel 4 and a tire 5.

The front right tire-wheel assembly 2_{FR} is rotationally driven by a front-right-tire-wheel-assembly driving apparatus 7_{FR} including a front-right-tire-wheel-assembly driving motor 6_{FR} (motor). The front left tire-wheel assembly 2_{FL} is rotationally driven by a front-left-tire-wheel-assembly driving apparatus 9_{FL} including a front-left-tire-wheel-assembly driving motor 8_{FL} (motor). The front-right-tire-wheel-assembly driving motor 6_{FR} is an in-wheel three-phase alternating-current (AC) electric motor incorporated in the wheel 4 of the front right tire-wheel assembly 2_{FR}. The front-left-tire-wheel-assembly driving motor 8_{FL} is an in-wheel three-phase AC electric motor incorporated in the wheel 4 of the front left tire-wheel assembly 2_{FL}.

The rear right tire-wheel assembly 3_{RR} is rotationally driven by a rear-right-tire-wheel-assembly driving apparatus 11_{RR} including a rear-right-tire-wheel-assembly driving motor 100_{RR}. The rear left tire-wheel assembly 3_{RL} is rotationally driven by a rear-left-tire-wheel-assembly driving apparatus 13_{RL} including a rear-left-tire-wheel-assembly driving motor 12_{RL}. The rear-right-tire-wheel-assembly driving motor 10_{RR} is an in-wheel three-phase AC electric motor incorporated in the wheel 4 of the rear right tire-wheel assembly 3_{RR}. The rear-left-tire-wheel-assembly driving motor 12_{RL} is an in-wheel three-phase AC electric motor incorporated in the wheel 4 of the rear left tire-wheel assembly 3_{RL}. In the present embodiment, the rear right tire-wheel assembly 3_{RR} and the rear left tire-wheel assembly 3_{RL} have a direct-drive configuration, that is, the rear right tire-wheel assembly 3_{RR} and the rear left tire-wheel assembly 3_{RL} are rotationally driven directly by the rear-right-tire-wheel-assembly driving motor 10_{RR} and the rear-left-tire-wheel-assembly driving motor 12_{RL}, respectively.

The vehicle 1 further includes a steering operation mechanism 14 configured to steer the front right tire-wheel assembly 2_{FR} and the front left tire-wheel assembly 2_{FL}. The steering operation mechanism 14 includes a steering wheel 15, a steering shaft 16, a first pinion shaft 17, a rack shaft 18, and two tie rods 19. The steering shaft 16 rotates in response to a steering operation of the steering wheel 15. The first pinion shaft 17 is coupled to the steering shaft 16 so as to rotate together with the steering shaft 16 in an integrated manner. The first pinion shaft 17 has first pinion teeth 17a. The first pinion teeth 17a are meshed with first rack teeth 18a of the rack shaft 18. The tie rods 19 are coupled to respective axial end portions of the rack shaft 18. The front right tire-wheel assembly 2_{FR} and the front left tire-wheel assembly 2_{FL} are coupled to the rack shaft 18 via the tie rods 19 and knuckle arms (not illustrated).

As the steering wheel 15 is steered, the first pinion shaft 17 rotates together with the steering shaft 16, and the rotation of the first pinion shaft 17 is converted into a reciprocating motion of the rack shaft 18. Thus, the steered angle of the front right tire-wheel assembly 2_{FR} and the front left tire-wheel assembly 2_{FL} changes, and the front right tire-wheel assembly 2_{FR} and the front left tire-wheel assembly 2_{FL} are steered. The vehicle 1 further includes a steering assist mechanism 20 configured to apply a steering assist force to the steering operation mechanism 14. The steering assist mechanism 20 includes a second pinion shaft 21, a steering assist motor 22, and a steering assist speed-reducer 23. The second pinion shaft 21 is rotationally driven by the steering assist motor 22. The steering assist speed-reducer 23 reduces the speed of rotation output from the steering assist motor 22, and transmits a rotary driving force generated by the steering assist motor 22 to the second pinion shaft 21. The second pinion shaft 21 has second pinion teeth 21 a. The second pinion teeth 21 a are meshed with second rack teeth 18b of the rack shaft 18.

As the steering assist motor 22 is driven, the speed of rotation output from the steering assist motor 22 is reduced by the steering assist speed-reducer 23, and a rotary driving force generated by the steering assist motor 22 is transmitted to the second pinion shaft 21. Thus, the second pinion shaft 21 rotates, and the rotation of the second pinion shaft 21 is converted into a reciprocating motion of the rack shaft 18. In this way, the steering assist force is applied to the steering operation mechanism 14 by the steering assist mechanism 20.

The vehicle 1 further includes an electronic control unit (ECU) 24, an inverter module 25, and a battery 26. The ECU 24 is, for example, a microcomputer including a central processing unit (CPU) and memories (e.g., a read-only memory (ROM), a random-access memory (RAM), and a non-volatile memory). The ECU 24 controls the driving of the front-right-tire-wheel-assembly driving motor 6_{FR}, the front-left-tire-wheel-assembly driving motor 8_{FL}, the rear-right-tire-wheel-assembly driving motor 10_{RR}, the rear-left-tire-wheel-assembly driving motor 12_{RL}, and the steering assist motor 22, via the inverter module 25.

The inverter module 25 includes a plurality of three-phase inverter circuits configured to individually drive the front-right-tire-wheel-assembly driving motor 6_{FR}, the front-left-tire-wheel-assembly driving motor 8_{FL}, the rear-right-tire-wheel-assembly driving motor 10_{RR}, the rear-left-tire-wheel-assembly driving motor 12_{RL}, and the steering assist motor 22. The inverter module 25 drives the front-right-tire-wheel-assembly driving motor 6_{FR} and the front-left-tire-wheel-assembly driving motor 8_{FL}, with electric power supplied from the battery 26. Thus, the front-right-tire-wheel-assembly driving motor 6_{FR} and the front-left-tire-wheel-assembly driving motor 8_{FL} are rotationally driven, so that the front right tire-wheel assembly 2_{FR} and the front left tire-wheel assembly 2_{FL} rotate. In addition, the inverter module 25 drives the rear-right-tire-wheel-assembly driving motor 10_{RR} and the rear-left-tire-wheel-assembly driving motor 12_{RL}, with electric power supplied from the battery 26. Thus, the rear-right-tire-wheel-assembly driving motor 10_{RR} and the rear-left-tire-wheel-assembly driving motor 12_{RL} are rotationally driven, so that the rear right tire-wheel assembly 3_{RR} and the rear left tire-wheel assembly 3_{RL} rotate. In addition, the inverter module 25 drives the steering assist motor 22, with electric power supplied from the battery 26. Thus, a steering assist force is applied to the steering operation mechanism 14.

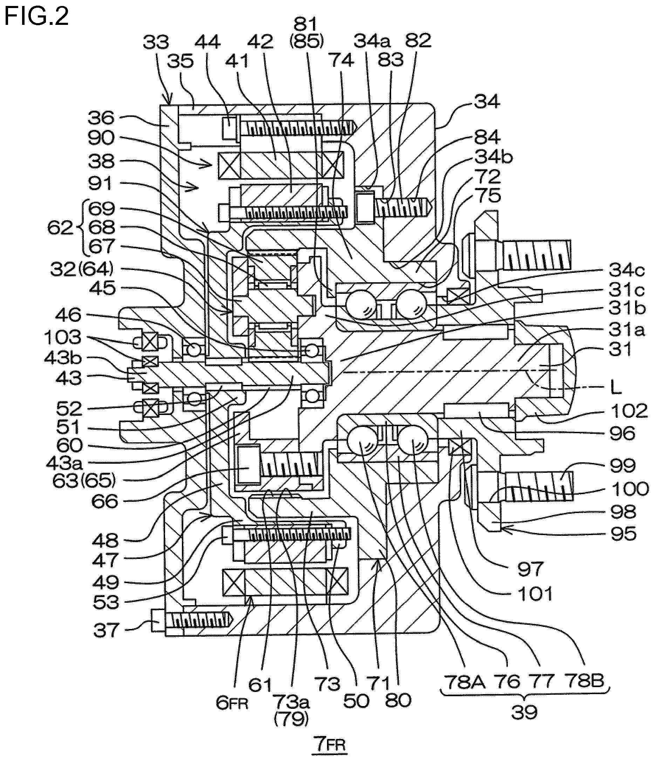

Next, with reference to FIG. 2, the detailed configuration of the front-right-tire-wheel-assembly driving apparatus 7_{FR} incorporated in the wheel 4 of the front right tire-wheel assembly 2_{FR} will be described. FIG. 2 is a sectional view illustrating the front-right-tire-wheel-assembly driving apparatus 7_{FR} according to an embodiment of the invention. Because the front right tire-wheel assembly 2_{FR} and the front left tire-wheel assembly 2_{FL} have almost the same configuration, the configuration of the front right tire-wheel assembly 2_{FR} will be described by way of example, and description on the configuration of the front left tire-wheel assembly 2_{FL} will be omitted.

With reference to FIG. 2, the front-right-tire-wheel-assembly driving apparatus 7_{FR} includes an output shaft 31, the front-right-tire-wheel-assembly driving motor 6_{FR}, a speed-reducer 32, and a housing 33. The output shaft 31 is coupled to the wheel 4. The speed-reducer 32 reduces the speed of rotation output from the front-right-tire-wheel-assembly driving motor 6_{FR}, and transmits a rotary driving force generated by the front-right-tire-wheel-assembly driving motor 6_{FR} to the output shaft 31. The housing 33 accommodates the output shaft 31, the front-right-tire-wheel-assembly driving motor 6_{FR}, the speed-reducer 32, and so forth.

Hereinafter, the direction in which a central axis L of the output shaft 31 extends will be simply referred to as "axial direction". In the axial direction, the direction toward the inside of the vehicle 1 will be simply referred to as "axially-inward direction", and the direction toward the outside of the vehicle 1 will be simply referred to as "axially-outward direction". The radial direction of the output shaft 31 will be simply referred to as "radial direction". In the radial direction, the direction toward the central axis L will be simply referred to as "radially inward direction", and the direction away from the central axis L will be simply referred to as "radially outward direction".

The housing 33 is made of a metal material containing, for example, aluminum. The housing 33 includes an annular portion 34 having an annular plate shape, a cylindrical portion 35 having a cylindrical shape, and a closing member 36 having an annular plate shape. The annular portion 34 is centered at the output shaft 31. The cylindrical portion 35 protrudes in the axially-inward direction from a peripheral edge of the annular portion 34, and opens on the opposite side of the housing 33 from the annular portion 34. The closing member 36 closes the opening of the cylindrical portion 35. The closing member 36 of the housing 33 is fastened to the cylindrical portion 35 with a bolt 37. The annular portion 34, the cylindrical portion 35, and the closing member 36 of the housing 33 define an internal space 38 in which the output shaft 31, the front-right-tire-wheel-assembly driving motor 6_{FR}, the speed-reducer 32, and so forth are accommodated.

A first recess portion 34a and a second recess portion 34b are provided in the annular portion 34 of the housing 33. The first recess portion 34a is recessed in the axially-outward direction from an axially-inner-side surface of the annular portion 34. The second recess portion 34b is recessed in the axially-outward direction from the bottom of the first recess portion 34a. The second recess portion 34b has a radial width (opening width) that is smaller than the radial width (opening width) of the first recess portion 34a. A through-hole 34c extending through the second recess portion 34b in the axial direction is provided in the central portion of the bottom of the second recess portion 34b.

The output shaft 31 has one end portion 31 a located on the axially-outer side and the other end portion 31b located on the axially-inner side. The one end portion 31a of the output shaft 31 passes through the annular portion 34 of the housing 33 (the through-hole 34c of the second recess portion 34b), and is located outside the housing 33. The other end portion 31b of the output shaft 31 is located in the internal space 38 of the housing 33. The output shaft 31 is supported by a hub bearing 39 provided in the housing 33 so as to be rotatable relative to the housing 33. The detailed configuration of the hub bearing 39 will be described later in detail.

In the present embodiment, the front-right-tire-wheel-assembly driving motor 6_{FR} is an inner rotor motor. The front-right-tire-wheel-assembly driving motor 6_{FR} includes a stator 41 having an annular shape, a rotor 42 having an annular shape, and a motor shaft 43 having a columnar shape. The stator 41 is fixed to an inner peripheral surface of the cylindrical portion 35 of the housing 33. The rotor 42 having an annular shape is disposed radially inward of the stator 41. The motor shaft 43 is disposed radially inward of the rotor 42, and is coupled to the rotor 42. The stator 41 is fastened to the inner peripheral surface of the cylindrical portion 35 of the housing 33 with a bolt 44. The stator 41 is provided with stator coils including a U-phase coil, a V-phase coil, and a W-phase coil that respectively correspond to the U-phase, V-phase, and W-phase of the front-right-tire-wheel-assembly driving motor 6_{FR}.

The motor shaft 43 is disposed coaxially with the output shaft 31. The motor shaft 43 has one end portion 43a located on the axially-outer side and the other end portion 43b located on the axially-inner side. The one end portion 43a of the motor shaft 43 is rotatably coupled to the other end portion 31b of the output shaft 31 via a bearing 45. The other end portion 43b of the motor shaft 43 extends through the closing member 36 of the housing 33, and is drawn outside the housing 33. The other end portion 43b of the motor shaft 43 is supported by a bearing 46 attached to an inner wall surface of the closing member 36 so as to be rotatable relative to the closing member 36. Thus, the motor shaft 43 is supported so as to be rotatable relative to the housing 33, and is rotatable relative to the output shaft 31.

In the present embodiment, the rotor 42 is coupled to the motor shaft 43 via a coupling member 47. More specifically, the coupling member 47 includes an annular portion 48 having an annular plate shape, a cylindrical portion 49, a flange portion 50, and a boss portion 51. The cylindrical portion 49 protrudes in a cylindrical shape in the axially-outward direction from a peripheral edge of the annular portion 48. The flange portion 50 protrudes in the radial direction from an axially-outer-side end portion of the cylindrical portion 49. The boss portion 51 extends toward one side in the axial direction (in the present embodiment, in the axially-outward direction) from an inner peripheral edge of the annular portion 48.

The coupling member 47 is coupled to the motor shaft 43 so as to be rotatable together with the motor shaft 43 in an integrated manner, when the boss portion 51 is connected to the motor shaft 43 via a key 52. The rotor 42 is supported by the cylindrical portion 49 and the flange portion 50 of the coupling member 47. That is, the cylindrical portion 49 and the flange portion 50 of the coupling member 47 constitute a supporting portion that supports the rotor 42. In the present embodiment, the rotor 42 is fastened to the flange portion 50 with a bolt 53. Thus, the rotor 42 is prevented from being detached from the coupling member 47. The rotor 42 and the motor shaft 43 are coupled together via the coupling member 47 so as to be rotatable together with each other in an integrated manner.

In the front-right-tire-wheel-assembly driving motor 6_{FR}, as the rotor 42 is rotationally driven, a rotary driving force of the rotor 42 is transmitted to the motor shaft 43 via the coupling member 47. Thus, the motor shaft 43 is rotationally driven. As the motor shaft 43 is rotationally driven, the rotary driving force of the motor shaft 43 is transmitted to the speed-reducer 32. The speed-reducer 32 is disposed radially inward of the front-right-tire-wheel-assembly driving motor 6_{FR}. The speed-reducer 32 reduces the speed of rotation output from the motor shaft 43, and transmits the rotary driving force of the motor shaft 43 to the output shaft 31. In the present embodiment, the speed-reducer 32 includes a planetary gear mechanism 64 including a sun gear 60, a ring gear 61 having an annular shape, planet gears 62, and a carrier 63. The sun gear 60 is coupled to the one end portion 43a of the motor shaft 43 so as to be rotatable together with the motor shaft 43 in an integrated manner. The ring gear 61 is non-rotatably disposed around the sun gear 60. The planet gears 62 are disposed between the sun gear 60 and the ring gear 61 so as to be meshed with both the sun gear 60 and the ring gear 61. The carrier 63 is coupled to the output shaft 31 so as to be rotatable together with the output shaft 31 in an integrated manner. The carrier 63 holds the planet gears 62 so as to allow the planet gears 62 to rotate about their axes, and holds the planet gears 62 so as to allow the planet gears 62 to turn around the axis of the sun gear 60.

In the present embodiment, the sun gear 60 is provided so as to be integral with the one end portion 43a of the motor shaft 43. The sun gear 60 is coupled to the rotor 42 via the motor shaft 43 and the coupling member 47 so as to be rotatable together with the rotor 42 in an integrated manner. The carrier 63 includes a carrier annular portion 65 having an annular plate shape. The carrier annular portion 65 is disposed apart from the output shaft 31 in the axially-outward direction, between the coupling member 47 of the front-right-tire-wheel-assembly driving motor 6_{FR} and the other end portion 31b of the output shaft 31. The carrier 63 is fixed to the output shaft 31 when the carrier annular portion 65 and the other end portion 31b of the output shaft 31 are fastened together with a bolt 66. Each of the planet gears 62 includes a planet gear shaft 67 and a gear portion 69. The planet gear shaft 67 is supported between the other end portion 31b of the output shaft 31 and the carrier annular portion 65. The gear portion 69 is rotatably supported by the planet gear shaft 67 via a bearing 68.

The front-right-tire-wheel-assembly driving apparatus 7_{FR} further includes a ring-gear supporting member 71 having a generally cylindrical shape. The ring gear 61 is non-rotatably supported by the ring-gear supporting member 71. The ring gear 61 is fixed to the housing 33 via the ring-gear supporting member 71. The ring-gear supporting member 71 is preferably made of a metal material having a higher strength than that of the housing 33 (e.g., chrome molybdenum steel).

The ring-gear supporting member 71 includes a first cylindrical portion 72, a second cylindrical portion 73 having a cylindrical shape, and a base portion 74 having an annular shape. The first cylindrical portion 72 is located on the axially-outer side, and is inserted in the second recess portion 34b of the annular portion 34 of the housing 33. The second cylindrical portion 73 is located on the axially-inner side, and extends through a region between the planet gears 62 and the rotor 42 (the cylindrical portion 49 of the coupling member 47) in the axial direction. The base portion 74 is connected to the first cylindrical portion 72 and the second cylindrical portion 73, at a position between the first cylindrical portion 72 and the second cylindrical portion 73.

The first cylindrical portion 72 of the ring-gear supporting member 71 is inserted in the second recess portion 34b so as to come into contact with a side wall and a bottom wall of the second recess portion 34b of the annular portion 34 of the housing 33. The first cylindrical portion 72 of the ring-gear supporting member 71 has an inner peripheral surface that is flush with an inner peripheral surface of the base portion 74 of the ring-gear supporting member 71. The hub bearing 39 is disposed radially inward of the first cylindrical portion 72 and the base portion 74 of the ring-gear supporting member 71. The inner peripheral surfaces of the first cylindrical portion 72 and the base portion 74 of the ring-gear supporting member 71 constitute a bearing-supporting portion 75 that supports the hub bearing 39. Hereinafter, the configurations of the output shaft 31, the hub bearing 39, and the bearing-supporting portion 75 of the ring-gear supporting member 71 will be described in detail.

In the present embodiment, the hub bearing 39 includes a double-row angular contact ball bearing. The hub bearing 39 includes an inner ring 76, an outer ring 77, and a plurality of rolling elements 78A, 78B. The rolling elements 78A, 78B are disposed between the inner ring 76 and the outer ring 77. In the present embodiment, the plurality of the rolling elements 78A, 78B includes a plurality of the first rolling elements 78A and a plurality of the second rolling elements 78B. The first rolling elements 78A are disposed on the axially-inner side, and are arranged along the circumferential direction of the inner ring 76 of the hub bearing 39. The second rolling elements 78B are disposed on the axially-outer side, and are arranged along the circumferential direction of the inner ring 76 of the hub bearing 39.

The inner ring 76 of the hub bearing 39 is fitted to an outer peripheral surface of the output shaft 31 so as to be rotatable together with the output shaft 31 in an integrated manner. In the present embodiment, the output shaft 31 has a receiving portion 31c that is in contact with an axially-inner-side end portion of the inner ring 76 of the hub bearing 39, and receives the inner ring 76 of the hub bearing 39 in the axial direction. This receiving portion 31c of the output shaft 31 serves also as a positioning portion that sets the position at which the inner ring 76 of the hub bearing 39 is disposed.

The outer ring 77 of the hub bearing 39 is non-rotatably supported by the bearing-supporting portion 75 of the ring-gear supporting member 71. The inner ring 76 is rotatably supported by the outer ring 77 of the hub bearing 39 via the rolling elements 78A, 78B. That is, the bearing-supporting portion 75 of the ring-gear supporting member 71 supports the output shaft 31 via the hub bearing 39 such that the output shaft 31 is rotatable. The second cylindrical portion 73 of the ring-gear supporting member 71 has an inner peripheral portion 73a facing the planet gears 62 at its axially-inner-side end portion, and supports the ring gear 61 at the inner peripheral portion 73a. In the present embodiment, the ring gear 61 is provided so as to be integral with the inner peripheral portion 73a of the second cylindrical portion 73. That is, the inner peripheral portion 73a of the second cylindrical portion 73 constitutes the ring gear-supporting portion 79 that supports the ring gear 61.

The base portion 74 of the ring-gear supporting member 71 includes an outer annular protrusion 80 and an inner annular protrusion 81. The outer annular protrusion 80 protrudes in an annular shape radially outward from an outer peripheral surface of the base portion 74. The inner annular protrusion 81 protrudes in an annular shape radially inward from the inner peripheral surface of the base portion 74. The outer annular protrusion 80 of the base portion 74 is configured to be fitted in the first recess portion 34a of the housing 33, and is in contact with a side wall and a bottom wall of the first recess portion 34a. The outer annular protrusion 80 is fastened to the bottom portion of the first recess portion 34a with a bolt 82. More specifically, a first bolt insertion hole 83 is selectively provided in the outer annular protrusion 80. In addition, a second bolt insertion hole 84 is provided in the bottom portion of the first recess portion 34a in the housing 33, at a position at which the second bolt insertion hole 84 is aligned with the first bolt insertion hole 83. The bolt 82 is inserted in the first bolt insertion hole 83 and the second bolt insertion hole 84 from the outer annular protrusion 80-side toward the annular portion 34 of the housing 33. In this way, the ring-gear supporting member 71 is fixed to the housing 33.

The inner annular protrusion 81 of the base portion 74 is configured to protrude radially inward so as to come into contact with an axially-inner-side end portion of the hub bearing 39 in the axial direction. The inner annular protrusion 81 of the ring-gear supporting member 71 is in contact with at least the outer ring 77 of the hub bearing 39 in the axial direction. The inner annular protrusion 81 constitutes a load-receiving portion 85 configured to receive axial loads applied to the output shaft 31, via the hub bearing 39.

As described above, the ring-gear supporting member 71 has, in addition to the function of fixing the ring gear 61 to the housing 33, the function of supporting the hub bearing 39 and the function of receiving axial loads applied to the output shaft 31, via the hub bearing 39. The ring-gear supporting member 71 is disposed in a region radially inward of the front-right-tire-wheel-assembly driving motor 6_{FR} and radially outward of the speed-reducer 32. The ring-gear supporting member 71 defines a first accommodation chamber 90 in which the front-right-tire-wheel-assembly driving motor 6_{FR} is accommodated and disposed. The first accommodation chamber 90 is disposed radially outward of the ring-gear supporting member 71. The ring-gear supporting member 71 defines a second accommodation chamber 91 in which the output shaft 31 and the speed-reducer 32 are accommodated and disposed. The second accommodation chamber 91 is disposed radially inward of the ring-gear supporting member 71. More specifically, the second accommodation chamber 91 is defined by a region surrounded by an inner wall surface of the ring-gear supporting member 71. The first accommodation chamber 90 is defined by a region interposed between an outer wall surface of the ring-gear supporting member 71 and an inner wall surface of the cylindrical portion 35 of the housing 33.

When configuration in which the first accommodation chamber 90 and the second accommodation chamber 91 are defined is employed, the front-right-tire-wheel-assembly driving apparatus 7_{FR} may be assembled through the following steps. That is, first, the output shaft 31, the hub bearing 39, the planet gears 62, and so forth are installed in the second accommodation chamber 91 defined by the ring-gear supporting member 71, whereby an assembly unit in which these components are disposed in an integrated manner is formed (sub-assembly). Subsequently, the assembly unit (sub-assembly) is attached to the housing 33, and then the front-right-tire-wheel-assembly driving motor 6_{FR} is installed in the first accommodation chamber 90 defined between the housing 33 and the ring-gear supporting member 71. When the configuration in which the first accommodation chamber 90 and the second accommodation chamber 91 are defined in the housing 33 is employed, it becomes easier to install each of the constituent components that are accommodated and disposed in the housing 33.

Referring to FIG. 2 again, outside the housing 33, a wheel coupling member 95 to be coupled to the wheel 4 is attached to the one end portion 31 a of the output shaft 31 so as to be rotatable together with the output shaft 31 in an integrated manner. The wheel coupling member 95 includes a boss portion 97 having a cylindrical shape, and a flange portion 98 having an annular plate shape. The boss portion 97 is coupled to the one end portion 31a of the output shaft 31 through a key 96. The flange portion 98 extends radially outward from an axially-outer-side end portion of the boss portion 97.

The flange portion 98 has a bolt insertion hole 100 through which the bolt 99 for attaching the wheel coupling member 95 to the wheel 4 is inserted. A seal member 101 is provided between the wheel coupling member 95 and the annular portion 34 of the housing 33. A nut 102 is screwed to the one end portion 31a of the output shaft 31, so that the wheel coupling member 95 is prevented from detaching from the output shaft 31.

Outside the housing 33, a rotation angle detection sensor 103 (in the present embodiment, a resolver) for detecting a rotation angle of the motor shaft 43 is attached to the other end portion 43b of the motor shaft 43. When the output shaft 31 is rotationally driven with the wheel coupling member 95 coupled to the wheel 4, a rotary driving force of the output shaft 31 is transmitted to the wheel coupling member 95, so that the wheel coupling member 95 rotates. As the wheel coupling member 95 is rotationally driven, a rotary driving force of the wheel coupling member 95 is transmitted to the wheel 4, so that the wheel 4 rotates. In this way, the front right tire-wheel assembly 2_{FR} rotates.

In the front-right-tire-wheel-assembly driving apparatus 7_{FR} according to the present embodiment, the speed-reducer 32 is disposed radially inward of the front-right-tire-wheel-assembly driving motor 6_{FR}. Thus, it is possible to appropriately reduce the axial width of the front-right-tire-wheel-assembly driving apparatus 7_{FR}. Thus, it is possible to provide the front-right-tire-wheel-assembly driving apparatus 7_{FR} configured to achieve desired size reduction thereof. In addition, in the front-right-tire-wheel-assembly driving apparatus 7_{FR} according to the present embodiment, the first accommodation chamber 90 and the second accommodation chamber 91 are defined by the ring-gear supporting member 71, in the internal space 38 of the housing 33. The front-right-tire-wheel-assembly driving motor 6_{FR} is accommodated and disposed in the first accommodation chamber 90. The output shaft 31 and the speed-reducer 32 are accommodated and disposed in the second accommodation chamber 91. Thus, it is possible to define each of the regions in which the front-right-tire-wheel-assembly driving motor 6_{FR}, the output shaft 31, and the speed-reducer 32 are accommodated and disposed. Thus, it becomes easier to install the front-right-tire-wheel-assembly driving motor 6_{FR}, the output shaft 31, and the speed-reducer 32 in the housing 33. As a result, it becomes possible to achieve desired size reduction of the front-right-tire-wheel-assembly driving apparatus 7_{FR} and increase the efficiency of producing the front-right-tire-wheel-assembly driving apparatus 7_{FR}.

In the front-right-tire-wheel-assembly driving apparatus 7_{FR} according to the present embodiment, the ring-gear supporting member 71 for fixing the ring gear 61 to the housing 33 includes the bearing-supporting portion 75 (the first cylindrical portion 72 and the base portion 74 of the ring-gear supporting member 71) that supports the hub bearing 39, at a position between the output shaft 31 and the bearing-supporting portion 75. Thus, it is not necessary to use another member for supporting the hub bearing 39 between the output shaft 31 and the ring-gear supporting member 71, and thus the number of components can be reduced. As a result, it is possible to achieve further size reduction of the front-right-tire-wheel-assembly driving apparatus 7_{FR}.

In addition, in the front-right-tire-wheel-assembly driving apparatus 7_{FR} according to the present embodiment, the ring-gear supporting member 71 includes the load-receiving portion 85 (the inner annular protrusion 81 of the base portion 74 of the ring-gear supporting member 71) for receiving axial loads applied to the output shaft 31, via the hub bearing 39. With this configuration, the axial loads applied to the output shaft 31 can be received by the load-receiving portion 85 of the ring-gear supporting member 71. With the configuration in which the ring-gear supporting member 71 includes the load-receiving portion 85, it is possible to make the axial thickness of the load-receiving portion 85 smaller than that in a case where the load-receiving portion 85 is provided separately from the ring-gear supporting member 71. Furthermore, the load-receiving portion 85 can be formed using a part of the ring-gear supporting member 71. Thus, it is possible to reduce the number of components. As a result, it is possible to achieve further size reduction of the front-right-tire-wheel-assembly driving apparatus 7_{FR}, from this viewpoint.

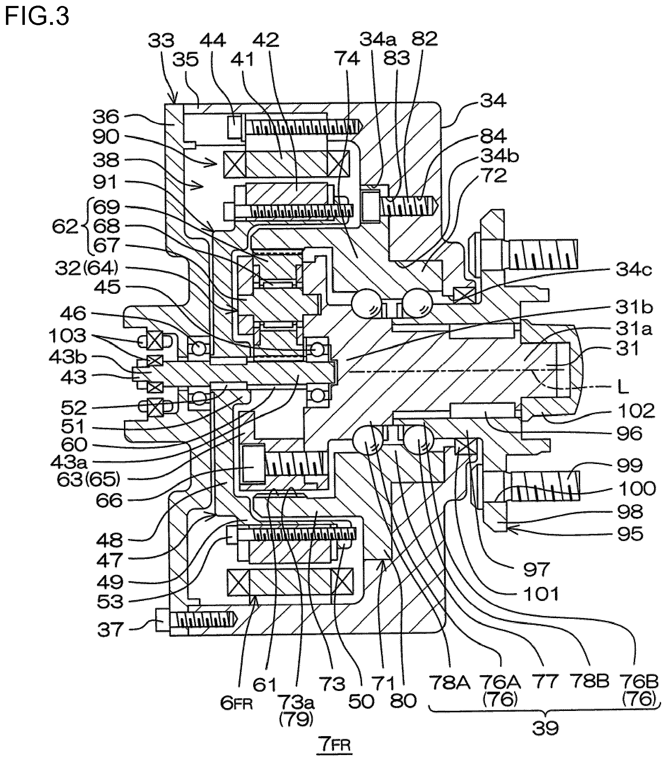

FIG. 3 is a sectional view illustrating a front-right-tire-wheel-assembly driving apparatus 7_{FR} according to another embodiment of the invention. In FIG. 3, the same configurations as those described with reference to FIG. 1 and FIG. 2 will be denoted by the same reference symbols as those in FIG. 1 and FIG. 2, and description thereof will be omitted. In the front-right-tire-wheel-assembly driving apparatus 7_{FR} according to the present embodiment, an inner ring 76 of the hub bearing 39 includes a first portion 76A configured to support a plurality of the first rolling elements 78A and a second portion 76B configured to support a plurality of the second rolling elements 78B. The first portion 76A of the inner ring 76 is integral with the output shaft 31. The second portion 76B of the inner ring 76 is integral with the boss portion 97 of the wheel coupling member 95. The outer ring 77 of the hub bearing 39 is integral with the first cylindrical portion 72 and the base portion 74 of the ring-gear supporting member 71.

With this configuration as well, it is possible to exhibit the same effects as those described in the foregoing embodiment. In the front-right-tire-wheel-assembly driving apparatus 7_{FR} according to the present embodiment, it is possible to form the inner ring 76 of the hub bearing 39 using a part of the output shaft 31 and a part of the boss portion 97 of the wheel coupling member 95, and to form the outer ring 77 of the hub bearing 39 using a part of the ring-gear supporting member 71. Thus, in the front-right-tire-wheel-assembly driving apparatus 7_{FR} according to the present embodiment, the number of components is smaller than that in a case where the inner ring 76 and the outer ring 77 of the hub bearing 39 are individually provided. As a result, it becomes possible to achieve cost reduction.

While the example embodiments of the invention have been described so far, the invention may be implemented in various other embodiments. For example, in each of the foregoing embodiments, the front-right-tire-wheel-assembly driving motor 6_{FR} is an inner rotor motor. However, the front-right-tire-wheel-assembly driving motor 6_{FR} may be, instead of an inner rotor motor, an outer rotor motor including a stator 41 having an annular shape, and a rotor 42 having an annular shape and disposed radially outward of the stator 41. When this configuration is employed, for example, the stator 41 is fixed to the ring-gear supporting member 71 (an outer peripheral surface of the second cylindrical portion 73) and the rotor 42 is disposed between the stator 41 and the inner wall surface of the cylindrical portion 35 of the housing 33.

In each of the foregoing embodiments, a driving apparatus having the same configuration as that of the driving apparatuses 7_{FR}, 9_{FL} may be installed in each of the rear right tire-wheel assembly 3_{RR} and the rear left tire-wheel assembly 3_{RL}. In addition, in each of the foregoing embodiments, the boss portion 51 of the coupling member 47 may be spline-fitted to the motor shaft 43 without using the key 52, or may be serration-fitted to the motor shaft 43 without using the key 52. The boss portion 51 of the coupling member 47 may be fastened to the motor shaft 43 with a bolt, without using the key 52.

In the foregoing embodiments, the hub bearing 39 includes a double-row angular contact ball bearing. Alternatively, the hub bearing 39 may include, instead of a double-row angular contact ball bearing, a double-row tapered roller bearing. Further, it is possible to make a variety of design changes within the scope of the appended claims.

In the configuration of the invention, the speed-reducer is disposed radially inward of the motor. Thus, it is possible to appropriately reduce the axial width of the driving apparatus. As a result, it is possible to provide the driving apparatus configured to achieve desired size reduction thereof.

## Claims

1. A driving apparatus comprising:
an output shaft;
a motor including a stator having an annular shape, and a rotor having an annular shape, the rotor being disposed radially inward of the stator or being disposed radially outward of the stator; and
a speed-reducer disposed radially inward of the motor, the speed-reducer being configured to reduce a speed of rotation output from the rotor and transmit a rotary driving force of the rotor to the output shaft.

2. The driving apparatus according to claim 1, wherein
the speed-reducer includes a planetary gear mechanism, and
the planetary gear mechanism includes:
a sun gear coupled to the rotor so as to be rotatable together with the rotor in an integrated manner;
a ring gear non-rotatably disposed around the sun gear;
planet gears disposed between the sun gear and the ring gear so as to be meshed with both the sun gear and the ring gear; and
a carrier coupled to the output shaft so as to be rotatable together with the output shaft in an integrated manner, the carrier being configured to hold the planet gears so as to allow the planet gears to rotate about axes of the planet gears, and the carrier being configured to hold the planet gears so as to allow the planet gears to turn around an axis of the sun gear.

3. The driving apparatus according to claim 2, further comprising:
a ring-gear supporting member having a tubular shape, the ring-gear supporting member being configured to support the ring gear such that the ring gear is non-rotatable; and
a housing configured to accommodate the output shaft and the motor, wherein
the ring-gear supporting member is attached to the housing so as to define a first chamber in which the motor is accommodated and so as to define a second chamber in which the output shaft and the speed-reducer are accommodated, the first chamber is disposed radially outward of the ring-gear supporting member, and the second chamber is disposed radially inward of the ring-gear supporting member.

4. The driving apparatus according to claim 3, further comprising a bearing disposed between the output shaft and the ring-gear supporting member,
wherein the ring-gear supporting member includes a bearing-supporting portion configured to support the bearing, at a position between the output shaft and the ring-gear supporting portion.

5. The driving apparatus according to claim 4, wherein the ring-gear supporting member includes a load-receiving portion configured to receive an axial load applied to the output shaft, via the bearing.

6. A tire-wheel assembly comprising:
a wheel;
a tire; and
the driving apparatus according to any one of claims 1 to 5, the driving apparatus being disposed in the wheel, and the driving apparatus being configured to transmit a rotary driving force of the output shaft to the wheel.
